# EUROPÄISCHE PATENTSCHRIFT

(11) **EP 2 666 985 B1**
(45) Veröffentlichungstag und Bekanntmachung des Hinweises auf die Patenterteilung: **08.07.2015**
(21) Anmeldenummer: 12168711.5
(22) Anmeldetag: 21.05.2012
(51) Int. Cl.: F01N 3/20, F16L 53/00

(54) **Beheizbare Medienleitung**
Heatable tube for fluids
Conduite de milieu pouvant être chauffée

(43) Veröffentlichungstag der Anmeldung: 27.11.2013
(73) Patentinhaber: TI Automotive (Fuldabrück) GmbH, 34277 Fuldabrück (DE)
(72) Erfinder: Jensen, Hans, 73265 Dettingen unter Teck (DE); Barthel, Iris, 34270 Schauenburg (DE); Häckel, André, 34513 Waldeck (DE); Orth, Joachim, 34560 Fritzlar (DE)
(74) Vertreter: Rohmann, Michael

(56) Entgegenhaltungen:
- WO-A1-2007/032033
- WO-A1-2007/073286
- DE-A1-102010 032 189
- DE-U1-202009 016 368

## Beschreibung

Die Erfindung betrifft eine beheizbare Medienleitung für ein zu beheizendes fluides Medium, insbesondere für eine zu beheizende Harnstofflösung als fluides Medium, wobei ein Innenrohr vorgesehen ist sowie zumindest ein entlang des Innenrohres geführtes Heizelement und wobei ein Außenrohr das Innenrohr mit Abstand a umgibt. Mit dem Begriff fluides Medium ist insbesondere ein flüssiges Medium gemeint.

In Kraftfahrzeugen, insbesondere in Fahrzeugen mit Dieselmotor, ist in der Regel ein sogenanntes SCR-System mit einem SCR-Katalysator für die Abgasbehandlung vorhanden (SCR: selective catalytic reduction). Für eine effektive Reduzierung der im Abgas eines Kraftfahrzeuges enthaltenen Stickoxide wird dem Abgas vor einem SCR-Katalysator eine Harnstofflösung zudosiert. Eine solche Harnstofflösung bzw. wässrige Harnstofflösung hat den Nachteil, dass Harnstoff bei Temperaturen unter minus 11 °C gefriert und teilweise auskristallisiert. Dadurch wird eine weitere funktionssichere Zufuhr der Harnstofflösung behindert oder vollständig blockiert und eine effektive Reduzierung der Stickoxide im Abgas beeinträchtigt bzw. verhindert. Um derartige Störungen zu vermeiden, werden die Zuführungsleitungen bzw. Rohrleitungen für die Harnstofflösung beheizt. Eine solche Beheizung wird insbesondere mit elektrisch betriebenen Heizelementen in Form von Heizdrähten oder Heizfolien durchgeführt.

Eine beheizbare Medienleitung der eingangs beschriebenen Art ist aus der Praxis grundsätzlich bekannt. Bei dieser Medienleitung ist zwischen Außenrohr und Innenrohr eine Luftschicht als Isolationsschicht vorhanden. Diese bekannten Medienleitungen zeichnen sich jedoch durch den Nachteil aus, dass insbesondere durch Wärmekonvektion thermische Verluste resultieren. Deshalb ist für die Beheizung dieser Medienleitungen eine unerwünscht hohe Energiemenge bzw. elektrische Energiemenge erforderlich.

Demgegenüber liegt der Erfindung das technische Problem zugrunde, eine beheizbare Medienleitung der eingangs genannten Art anzugeben, bei der die vorstehend erläuterten Nachteile vermieden werden können und die sich durch eine optimale thermische Isolation auszeichnet.

Zur Lösung dieses technischen Problems lehrt die Erfindung eine beheizbare Medienleitung für ein zu beheizendes fluides Medium, insbesondere für eine Harnstofflösung als Medium, wobei ein Innenrohr vorgesehen ist sowie zumindest ein entlang des Innenrohres geführtes Heizelement zum Beheizen des Mediums, wobei ein Außenrohr das Innenrohr mit Abstand a zum Innenrohr umgibt und wobei in der dem Innenrohr zugewandten Innenoberfläche des Außenrohres eine Mehrzahl von Nuten vorgesehen ist, die sich über zumindest einen Teil der Länge des Außenrohres in Längsrichtung des Außenrohres erstrecken. Zweckmäßigerweise erstrecken sich die Nuten über den Großteil der Länge des Außenrohres und bevorzugt über die gesamte bzw. über quasi die gesamte Länge des Außenrohres. Es liegt im Rahmen der Erfindung, dass im Abstandsraum bzw. im Zwischenraum zwischen Innenrohr und Außenrohr Luft bzw. eine Luftschicht vorhanden ist. - Gemäß einer sehr bevorzugten Ausführungsform der Erfindung ist die beheizbare Medienleitung Bestandteil eines Kraftfahrzeuges und insbesondere Bestandteil eines SCR-Systems eines Kraftfahrzeuges.

Empfohlenermaßen besteht das Innenrohr aus Kunststoff bzw. im Wesentlichen aus Kunststoff. Vorzugsweise ist das Innenrohr zylinderförmig ausgebildet und weist somit einen kreisförmigen Querschnitt auf. Es liegt im Rahmen der Erfindung, dass das zu beheizende fluide Medium, insbesondere die zu beheizende Harnstofflösung bzw. wässrige Harnstofflösung durch den Innenraum des Innenrohres geführt wird.

Es empfiehlt sich, dass das zumindest eine Heizelement unmittelbar auf der Außenoberfläche des Innenrohres angeordnet ist. Es hat sich als vorteilhaft erwiesen, zwischen dem Innenrohr und dem Außenrohr zumindest eine Zwischenschicht vorzusehen und zweckmäßigerweise ist dann das zumindest eine Heizelement zwischen der Zwischenschicht und dem Innenrohr angeordnet. Gemäß einer bevorzugten Ausführungsform handelt es sich bei der Zwischenschicht um zumindest einen Schutzstreifen, der um das Aggregat aus Innenrohr und Heizelement gewickelt wird. Zweckmäßigerweise ist der zumindest eine Schutzstreifen in Form eines Klebebandes mit innenrohrseitiger Klebefläche ausgeführt. - Grundsätzlich könnte das zumindest eine Heizelement auch innerhalb des Innenrohres bzw. im Innenraum des Innenrohres entlang des Innenrohres geführt werden.

Es liegt im Rahmen der Erfindung, dass es sich bei dem zumindest einen Heizelement um ein elektrisch betriebenes Heizelement handelt. Dann wird die Medienleitung bzw. das Medium also elektrisch beheizt. Vorzugsweise ist ein Heizelement als Heizdraht und/oder als Heizfolie ausgebildet. Es hat sich als zweckmäßig erwiesen, dass das Heizelement - insbesondere der Heizdraht und/oder die Heizfolie - wendelförmig um das Innenrohr gewickelt ist.

Es liegt im Rahmen der Erfindung, dass das Innenrohr konzentrisch in dem Außenrohr angeordnet ist bzw. von dem Außenrohr umgeben wird. Zweckmäßigerweise sind Innenrohr und Außenrohr koaxial zueinander angeordnet. In besonders vorteilhafter Ausgestaltung der Erfindung ist vorgesehen, dass der Abstand a der Innenoberfläche des Außenrohres zur Außenoberfläche des Innenrohres 0,3 bis 2 mm, bevorzugt 0,4 bis 1,7 mm beträgt. Dabei wird der Abstand a von den nutenfreien Bereichen der Innenoberfläche des Außenrohres ausgemessen. Zweckmäßigerweise ist der Abstand a über den Umfang des Außenrohres bzw. des Innenrohres gleich bzw. im Wesentlichen gleich.

Es liegt fernerhin im Rahmen der Erfindung, dass die Nuten über den Innenumfang des Außenrohres verteilt angeordnet sind und zwar vorzugsweise mit gleichen bzw. gleichmäßigen Abständen verteilt angeordnet sind. Empfohlenermaßen sind die Nuten parallel zueinander bzw. im Wesentlichen parallel zueinander orientiert und insbesondere parallel bzw. im Wesentlichen parallel zur Längsmittelachse L des Innenrohres bzw. des Außenrohres angeordnet.

Es hat sich als vorteilhaft erwiesen, dass die Nuten einen rechteckförmigen und/oder trapezförmigen Querschnitt aufweisen. Empfohlenermaßen weisen die zwischen den Nuten an der Innenoberfläche des Außenrohres vorgesehenen Stege einen rechteckförmigen und/oder trapezförmigen Querschnitt auf. Es liegt im Rahmen der Erfindung, dass die zwischen den Nuten vorhandenen Stege parallel zueinander angeordnet sind. Zweckmäßigerweise beträgt die radiale Tiefe t der Nuten 0,15 bis 0,40 mm, bevorzugt 0,20 bis 0,35 mm und sehr bevorzugt 0,20 bis 0,3 mm. Vorzugsweise beträgt die Breite b bzw. die größte Breite b der Nuten 0,45 bis 0,85 mm, bevorzugt 0,50 bis 0,80 mm und sehr bevorzugt 0,55 bis 0,75 mm. Der Begriff größte Breite bezieht sich hier insbesondere auf Nuten mit trapezförmigem Querschnitt.

Es liegt im Rahmen der Erfindung, dass die Außenoberfläche des Außenrohres glatt bzw. unprofiliert ausgebildet ist. Gemäß empfohlener Ausführungsform der Erfindung besteht das Außenrohr aus einem thermoplastischen Elastomer bzw. im Wesentlichen aus einem thermoplastischen Elastomer. Nach einer empfohlenen Ausführungsvariante besteht das Außenrohr aus EPDM bzw. im Wesentlichen aus EPDM. EPDM meint Ethylen-Propylen-Dien-Kautschuk.

Es empfiehlt sich, dass das Außenrohr - insbesondere mit Bezug auf seine Außenoberfläche - zylinderförmig und mit kreisförmigem Querschnitt ausgebildet ist. Es hat sich als vorteilhaft erwiesen, dass die Dicke d des Außenrohres 2,2 bis 3,0 mm, bevorzugt 2,4 bis 2,8 mm und sehr bevorzugt 2,5 bis 2,7 mm beträgt. Die Dicke des Außenrohres wird dabei von den nutenfreien Bereichen der Innenoberfläche des Außenrohres ausgemessen. Empfohlenermaßen beträgt der Innendurchmesser des Außenrohres 4,5 bis 7,0 mm und bevorzugt 5,0 bis 6,5 mm. Auch der Innendurchmesser wird von den nutenfreien Bereichen der Innenoberfläche des Außenrohres ausgemessen.

Der Erfindung liegt die Erkenntnis zugrunde, dass sich die erfindungsgemäße Medienleitung durch eine optimale thermische Isolierung auszeichnet und dass diese thermische Isolierung deutlich besser ist als bei den bislang bekannten beheizbaren Medienleitungen, insbesondere für beheizbare Harnstofflösungen. Aufgrund der erfindungsgemäßen Merkmale kann die innere Wärmekonvektion in der Medienleitung und insbesondere in der Luftschicht zwischen Außenrohr und Innenrohr beachtlich reduziert werden. Ein nachteilhaftes Abkühlen des zu beheizenden flüssigen Mediums bzw. der zu beheizenden Harnstofflösung kann erheblich vermindert werden. Der für die Beheizung der Medienleitung erforderliche Energieaufwand ist deutlich geringer als bei den bislang bekannten Medienleitungen. Die erfindungsgemäßen Medienleitungen können nichtsdestoweniger mit den gleichen Kosten oder sogar mit geringeren Kosten produziert werden als die bekannten Medienleitungen. Aus der Praxis sind insbesondere Medienleitungen mit Außenrohren in Form von Wellrohren bekannt. Die erfindungsgemäße Medienleitung - insbesondere bei glatter Außenoberfläche - zeichnet sich demgegenüber durch eine einfachere Montage im Kraftfahrzeug aus sowie durch eine geringere Geräuschentwicklung.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht einer erfindungsgemäßen Medienleitung,
- Fig. 2: einen Schnitt durch das Außenrohr der erfindungsgemäßen Medienleitung und
- Fig. 3: einen Längsschnitt durch das Außenrohr.

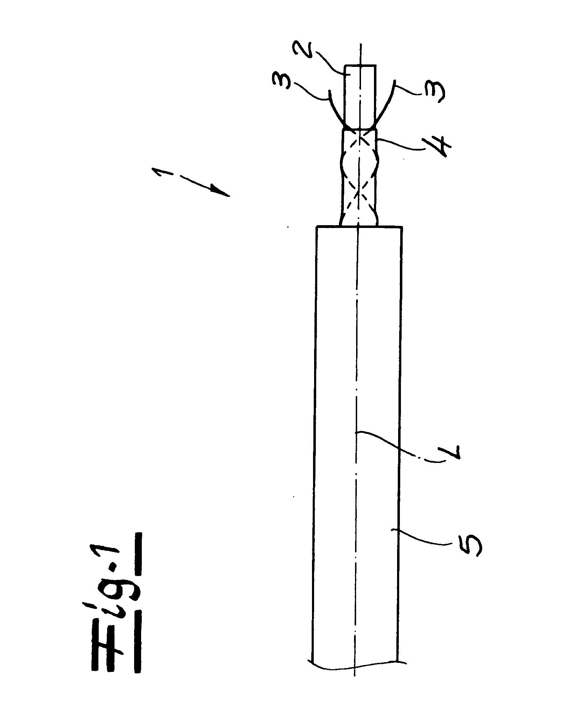

Fig. 1 zeigt eine beheizbare Medienleitung 1 für eine zu beheizende wässrige Harnstofflösung als flüssiges Medium. Die Medienleitung ist vorzugsweise Bestandteil eines SCR-Systems in einem Kraftfahrzeug. Im Ausführungsbeispiel weist die Medienleitung 1 ein die Harnstofflösung führendes Innenrohr 2 auf sowie ein in Form eines Heizdrahtes 3 ausgeführtes elektrisch betriebenes Heizelement zum Beheizen der Harnstofflösung. Der Heizdraht ist bevorzugt und im Ausführungsbeispiel nach Fig. 1 wendelförmig um die Außenoberfläche des Innenrohrs 2 gewickelt. Im Übrigen ist empfohlenermaßen und im Ausführungsbeispiel eine Zwischenschicht in Form eines Klebebandes 4 vorgesehen, wobei das Klebeband 4 wendelförmig um das Aggregat aus Innenrohr 2 und Heizdraht 3 gewickelt ist. Das Klebeband 4 weist zweckmäßigerweise eine nicht dargestellte innenrohrseitige Klebefläche auf. Weiterhin umgibt ein Außenrohr 5 das Innenrohr 2 mit einem Abstand a. Im Zwischenraum zwischen Innenrohr 2 und Außenrohr 5 ist Luft bzw. eine Luftschicht zur thermischen Isolierung vorhanden. Zweckmäßigerweise und im Ausführungsbeispiel ist das Innenrohr 2 konzentrisch in dem Außenrohr 5 angeordnet bzw. wird das Innenrohr 2 konzentrisch von dem Außenrohr 5 umgeben. Innenrohr 2 und Außenrohr 5 sind somit koaxial angeordnet. Bevorzugt und im Ausführungsbeispiel ist der Abstand a zwischen Innenrohr 2 und Außenrohr 5 über den Umfang des Innenrohres 2 bzw. des Außenrohres 5 gleichbleibend bzw. konstant. Dieser Abstand a mag beispielsweise 1 mm betragen.

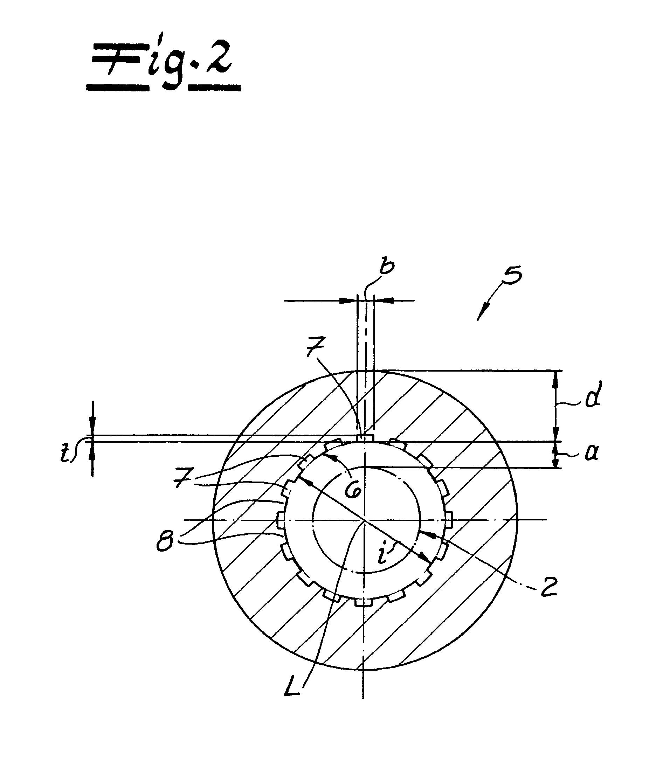

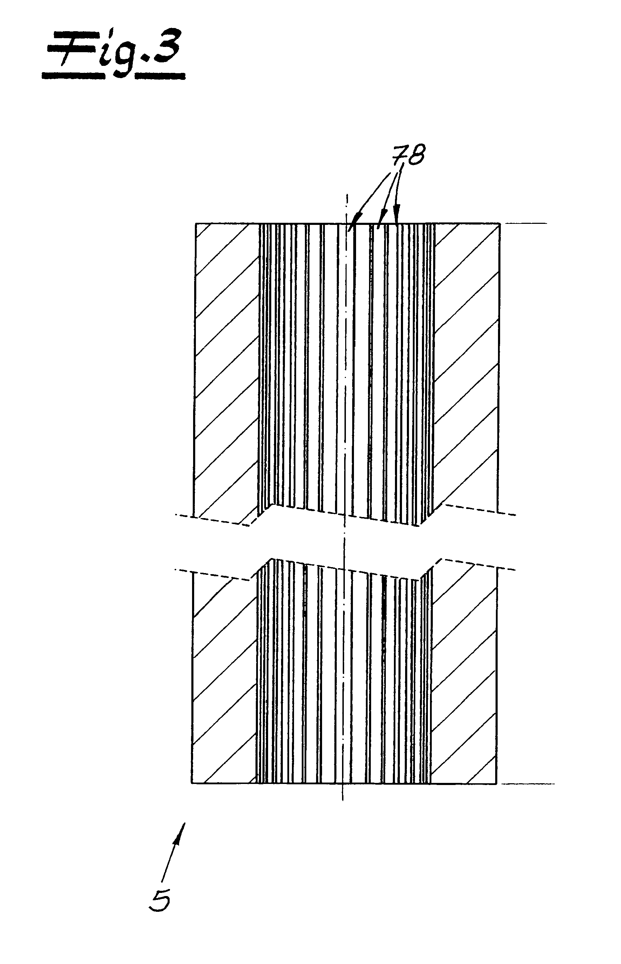

Erfindungsgemäß ist in der dem Innenrohr 2 zugewandten Innenoberfläche 6 des Außenrohres 5 eine Mehrzahl von Nuten 7 vorgesehen (Fig. 2 und 3). Vorzugsweise und im Ausführungsbeispiel erstrecken sich die Nuten 7 über die gesamte Länge des Außenrohres 5 in Längsrichtung des Außenrohres 5. Empfohlenermaßen und im Ausführungsbeispiel sind die Nuten 7 über den Innenumfang des Außenrohres 5 verteilt angeordnet und zwar mit gleichen bzw. gleichmäßigen Abständen (siehe insbesondere Fig. 2). Bevorzugt und in der in den Figuren dargestellten Ausführungsform sind die Nuten 7 parallel zueinander angeordnet und parallel zur Längsmittelachse L des Innenrohres 2 bzw. des Außenrohres 5 angeordnet. Vorzugsweise haben die Nuten 7 einen rechteckförmigen Querschnitt (Fig. 2). Zweckmäßigerweise haben auch die zwischen den Nuten 7 angeordneten Stege 8 einen solchen rechteckförmigen Querschnitt. Die radiale Tiefe t der Nuten 7 mag im Ausführungsbeispiel 0,20 bis 0,30 mm betragen. Zweckmäßigerweise beträgt die Breite b der Nuten 7 0,55 bis 0,75 mm. Die Dicke d des Außenrohres 5 mag im Ausführungsbeispiel 2,5 bis 2,7 mm betragen. Vorzugsweise beträgt der Innendurchmesser i des Außenrohres 5 5,0 bis 6,5 mm.

Den Fig. 1 und 2 ist entnehmbar, dass vorzugsweise und im Ausführungsbeispiel die Außenoberfläche des Außenrohres 5 glatt bzw. unprofiliert ausgebildet ist. Das Außenrohr besteht empfohlenermaßen aus EPDM.

## Patentansprüche

1. Beheizbare Medienleitung (1) für ein zu beheizendes fluides Medium, insbesondere für eine Harnstofflösung, wobei ein Innenrohr (2) vorgesehen ist sowie zumindest ein entlang des Innenrohres (2) geführtes Heizelement, wobei ein Außenrohr (5) das Innenrohr (2) mit Abstand a umgibt und wobei in der dem Innenrohr (2) zugewandten Innenoberfläche des Außenrohres (5) eine Mehrzahl von Nuten (7) vorgesehen ist, die sich über zumindest einen Teil der Länge des Außenrohres (5) in Längsrichtung des Außenrohres (5) erstrecken.

2. Beheizbare Medienleitung nach Anspruch 1, wobei das Heizelement ein Heizdraht (3) und/oder eine Heizfolie ist.

3. Beheizbare Medienleitung nach einem der Ansprüche 1 oder 2, wobei das zumindest eine Heizelement wendelförmig um das Innenrohr (2) gewickelt ist.

4. Beheizbare Medienleitung nach einem der Ansprüche 1 bis 3, wobei das Innenrohr (2) konzentrisch in dem Außenrohr (5) angeordnet ist bzw. konzentrisch von dem Außenrohr (5) umgeben wird.

5. Beheizbare Medienleitung nach einem der Ansprüche 1 bis 4, wobei der Abstand a der Innenoberfläche (6) des Außenrohres (5) zur Außenoberfläche des Innenrohres (2) 0, 3 bis 2 mm, vorzugsweise 0,4 bis 1,7 mm beträgt.

6. Beheizbare Medienleitung nach einem der Ansprüche 1 bis 5, wobei die Nuten (7) über den Innenumfang des Außenrohres (5) verteilt angeordnet sind, und zwar vorzugsweise mit gleichen bzw. gleichmäßigen Abständen.

7. Beheizbare Medienleitung nach einem der Ansprüche 1 bis 6, wobei die Nuten (7) parallel zueinander bzw. im Wesentlichen parallel zueinander angeordnet sind und insbesondere parallel bzw. im Wesentlichen parallel zur Längsmittelachse L des Innenrohres (2) bzw. des Außenrohres (5) angeordnet sind.

8. Beheizbare Medienleitung nach einem der Ansprüche 1 bis 7, wobei die Nuten (7) einen rechteckförmigen und/oder trapezförmigen Querschnitt aufweisen.

9. Beheizbare Medienleitung nach einem der Ansprüche 1 bis 8, wobei die radiale Tiefe t der Nuten (7) 0,15 bis 0,40 mm, bevorzugt 0,20 bis 0,35 mm und sehr bevorzugt 0,20 bis 0,30 mm beträgt.

10. Beheizbare Medienleitung nach einem der Ansprüche 1 bis 9, wobei die Breite b bzw. die größte Breite b der Nuten (7) 0,45 bis 0,85 mm, bevorzugt 0,50 bis 0,80 mm und sehr bevorzugt 0,55 bis 0,75 mm beträgt.

11. Beheizbare Medienleitung nach einem der Ansprüche 1 bis 10, wobei die Außenoberfläche des Außenrohres (5) glatt bzw. unprofiliert ausgebildet ist.

12. Beheizbare Medienleitung nach einem der Ansprüche 1 bis 11, wobei das Außenrohr (5) aus einem thermoplastischen Elastomer bzw. im Wesentlichen aus einem thermoplastischen Elastomer besteht.

13. Beheizbare Medienleitung nach einem der Ansprüche 1 bis 2, wobei das Außenrohr (5) aus EPDM bzw. im Wesentlichen aus EPDM besteht.

14. Beheizbare Medienleitung nach einem der Ansprüche 1 bis 13, wobei das Außenrohr (5) zylinderförmig und mit kreisförmigem Querschnitt ausgebildet ist.

15. Beheizbare Medienleitung nach einem der Ansprüche 1 bis 14, wobei die Dicke d des Außenrohres (5) 2,2 bis 3,0 mm, bevorzugt 2,4 bis 2,8 mm und sehr bevorzugt 2,5 bis 2,7 mm beträgt.

## Claims

1. A heatable media line (1) for fluidic medium to be heated, in particular for a urea solution, wherein an inner pipe (2) is provided as well as at least one heating element fed along the inner pipe (2), wherein an outer pipe (5) surrounds the inner pipe (2) at a distance a, and wherein a plurality of grooves (7) are provided in the inner surface of the outer pipe (5) facing towards the inner pipe (2), which grooves extend over at least a portion of the length of the outer pipe (5) in the longitudinal direction of the outer pipe (5).

2. The heatable media line according to claim 1, wherein the heating element is a heating wire (3) and/or a heating foil.

3. The heatable media line according to any one of claims 1 or 2, wherein the at least one heating element is wound spirally around the inner pipe (2).

4. The heatable media line according to any of claims 1 to 3, wherein the inner pipe (2) is arranged concentrically in the outer pipe (5) or is surrounded concentrically by the outer pipe (5).

5. The heatable media line according to any one of claims 1 to 4, wherein the distance a of the inner surface (6) of the outer pipe (5) from the outer surface of the inner pipe (2) is 0.3 to 2 mm, preferably 0.4 to 1.7 mm.

6. The heatable media line according to any one of claims 1 to 5, wherein the grooves (7) are arranged distributed over the inner circumference of the outer pipe (5), namely preferably at equal or uniform distances.

7. The heatable media line according to any one of claims 1 to 6, wherein the grooves (7) are arranged parallel or substantially parallel to one another and are in particular arranged parallel or substantially parallel to the longitudinal center axis L of the inner pipe (2) or the outer pipe (5).

8. The heatable media line according to any one of claims 1 to 7, wherein the grooves (7) have a rectangular and/or trapezoidal cross-section.

9. The heatable media line according to any one of claims 1 to 8, wherein the radial depth t of the grooves (7) is 0.15 to 0.40 mm, preferably 0.20 to 0.35 mm and more preferably 0.20 to 0.30 mm.

10. The heatable media line according to any one of claims 1 to 9, wherein the width b or the greatest width b of the grooves (7) is 0.45 mm to 0.85 mm, preferably 0.50 to 0.80 mm and more preferably 0.55 to 0.75 mm.

11. The heatable media line according to any one of claims 1 to 10, wherein the outer surface of the outer pipe (5) is formed to be smooth or non-profiled.

12. The heatable media line according to any one of claims 1 to 11, wherein the outer pipe (5) is composed of a thermoplastic elastomer or is substantially composed of a thermoplastic elastomer.

13. The heatable media line according to any one of claims 1 to 12, wherein the outer pipe (5) is composed of EPDM or is substantially composed of EPDM.

14. The heatable media line according to any of claims 1 to 13, wherein the outer pipe (5) is formed cylindrically and has a circular cross-section.

15. The heatable media line according to any one of claims 1 to 14, wherein the thickness d of the outer pipe (5) is 2.2 mm to 3 mm, preferably 2.4 to 2.8 mm and more preferably 2.5 to 2.7 mm.

## Revendications

1. Conduit de milieu pouvant être chauffé (1) pour un milieu fluide à chauffer, en particulier pour une solution d'urée, pour lequel un tube intérieur (2) est prévu ainsi qu'au moins un élément chauffant guidé le long du tube intérieur (2), pour lequel un tube extérieur (5) entoure avec un espace a le tube intérieur (2) et pour lequel dans la surface intérieure du tube extérieur (5) tournée vers le tube intérieur (2) est prévue une pluralité de rainures (7) qui s'étendent dans le sens longitudinal du tube extérieur (5) sur au moins une partie de la longueur du tube extérieur (5).

2. Conduit de milieu pouvant être chauffé selon la revendication 1 pour lequel l'élément chauffant est un fil chauffant (3) et/ou une feuille chauffante.

3. Conduit de milieu pouvant être chauffé selon l'une quelconque des revendications 1 ou 2 pour lequel au moins un élément chauffant est enroulé de façon hélicoïdale autour du tube intérieur (2).

4. Conduit de milieu pouvant être chauffé selon l'une quelconque des revendications 1 à 3 pour lequel le tube intérieur (2) est disposé de façon concentrique dans le tube extérieur (5) ou est entouré de façon concentrique par le tube extérieur (5).

5. Conduit de milieu pouvant être chauffé selon l'une quelconque des revendications 1 à 4 pour lequel l'espace a de la surface intérieure (6) du tube extérieur (5) à la surface extérieure du tube intérieur (2) est de 0,3 mm jusqu'à 2 mm, de préférence de 0,4 jusqu'à 1,7 mm.

6. Conduit de milieu pouvant être chauffé selon l'une quelconque des revendications 1 à 5 pour lequel les rainures (7) sont disposées réparties sur la périphérie intérieure du tube extérieur (5) et à savoir de préférence avec des espacements identiques ou constants.

7. Conduit de milieu pouvant être chauffé selon l'une quelconque des revendications 1 à 6 pour lequel les rainures (7) sont disposées parallèlement les unes aux autres ou pour l'essentiel parallèlement entre elles et sont disposées en particulier parallèlement ou pour l'essentiel parallèlement à l'axe central L du tube intérieur (2) ou du tube extérieur (5).

8. Conduit de milieu pouvant être chauffé selon l'une quelconque des revendications 1 à 7 pour lequel les rainures (7) présentent une section transversale de forme rectangulaire et/ou trapézoïdale.

9. Conduit de milieu pouvant être chauffé selon l'une quelconque des revendications 1 à 8 pour lequel la profondeur radiale t des rainures (7) est de 0,15 jusqu'à 0,40 mm, de préférence de 0,20 à 0,35 mm et de façon très préférée de 0,20 jusqu'à 0,30 mm.

10. Conduit de milieu pouvant être chauffé selon l'une quelconque des revendications 1 à 9 pour lequel la largeur b ou la plus grande largeur b des rainures (7) est de 0,45 jusqu'à 0,85 mm, de préférence de 0,50 jusqu'à 0,80 mm et de façon très préférée de 0,55 jusqu'à 0,75 mm.

11. Conduit de milieu pouvant être chauffé selon l'une quelconque des revendications 1 à 10 pour lequel la surface extérieure du tube extérieur (5) est constituée lisse ou non profilée.

12. Conduit de milieu pouvant être chauffé selon l'une quelconque des revendications 1 à 11 pour lequel le tube extérieur (5) est composé d'un élastomère thermoplastique ou pour l'essentiel d'un élastomère thermoplastique.

13. Conduit de milieu pouvant être chauffé selon l'une quelconque des revendications 1 à 12 pour lequel le tube extérieur (5) est composé d'EPDM ou pour l'essentiel d'EPDM.

14. Conduit de milieu pouvant être chauffé selon l'une quelconque des revendications 1 à 13 pour lequel le tube extérieur (5) est constitué de forme cylindrique et avec une section transversale circulaire.

15. Conduit de milieu pouvant être chauffé selon l'une quelconque des revendications 1 à 14 pour lequel l'épaisseur d du tube extérieur (5) est de 2,2 jusqu'à 3,0 mm, de préférence de 2,4 jusqu'à 2,8 mm et de façon très préférée de 2,5 jusqu'à 2,7 mm.
